# EUROPEAN PATENT SPECIFICATION

(11) **EP 1 438 811 B1**
(45) Date of publication and mention of the grant of the patent: **01.09.2010**
(21) Application number: 01274619.4
(22) Date of filing: 26.10.2001
(51) Int. Cl.: H04L 12/56

(54) **PACKET SWITCHED DATA NETWORK FOR TRANSFERRING DATA PACKETS WITH A PREDETERMINED DELAY AND A RADIO COMMUNICATION NETWORK EQUIPPED WITH SUCH A DATA NETWORK**
PAKETVERMITTELTES DATENNETZ ZUM TRANSFERIEREN VON DATENPAKETEN MIT EINER VORBESTIMMTEN VERZÖGERUNG UND MIT EINEM SOLCHEN DATENNETZ AUSGESTATTETES FUNKKOMMUNIKATIONSNETZ
RESEAU DE DONNEES A COMMUTATION PAR PAQUETS PERMETTANT DE TRANSFERER DES PAQUETS DE DONNEES AVEC UN RETARD PREDETERMINE, ET RESEAU DE COMMUNICATION RADIO EQUIPE D'UN TEL RESEAU DE DONNEES

(43) Date of publication of application: 21.07.2004
(73) Proprietor: Telefonaktiebolaget LM Ericsson (publ), 164 83 Stockholm (SE)
(72) Inventor: VAN DER WAL, Arnoud, NL-5120 AA Rijen (NL)
(74) Representative: Valkonet, Rutger
(86) International application number: PCT/EP2001/012570
(87) International publication number: WO 2003/039079

(56) References cited:
- US-A- 6 137 792
- SATORU OKAMOTO ET AL: "ATM CROSS-CONNECT SWITCH USING FOLDED BANYAN SWITCHING NETWORK WITH BYPASS LINKS" ELECTRONICS & COMMUNICATIONS IN JAPAN, PART I - COMMUNICATIONS, SCRIPTA TECHNICA. NEW YORK, US, vol. 73, no. 11, 1 November 1990 (1990-11-01), pages 50-57, XP000227658 ISSN: 8756-6621

## Description

### Field of the Invention

The present invention relates to telecommunications systems and, more specifically, to packet switched data networks and radio communication networks for radio communication between two or more radio telecommunication units.

### Background of the Invention

Such a system is disclosed in United States Patent nr. 6,137,792, which discloses a method and system for routing and transmitting data packets over a packet switched data network between a source computer and a destination computer, via a source and a destination router. The source router is arranged for setting up a bypass connection via a circuit switched telephone network to the destination router.

Wireless telecommunications systems, such as the well-known cellular and cordless radio telephone and data transmission systems, typically comprise a plurality of mobile or portable radio communication units and a plurality of radio access units. Each access unit provides a number of radio communication channels to a geographical area or cell, the size of which being defined by the operating range of the access unit.

A radio communication unit in a wireless radio communication system often has to change its radio communication link due to degrading link quality. This, for example, because another communication unit having a call in progress on the same radio link moves into the coverage area of a particular communication unit, or if the communication unit itself moves out of the coverage area of the radio access unit to which it currently connects.

Switching a call in progress from one physical radio link or channel to another physical radio link or channel is called handover. If such a handover is completed solely within the radio access unit to which a radio communication unit currently connects, this is called an intra-cell handover. If a call in progress is maintained through a radio access unit serving another cell of the radio communication system, this is called inter-cell handover. A call handover to another radio communication system is called inter-system handover or external handover.

In a radio environment, in which all the radio access units operate in a time synchronous manner, inter-cell and inter-system handover can be performed without timing reference constraints.

In current wireless radio communication systems, synchronisation between radio base stations is achieved by different techniques.

The radio access units or base stations may synchronise to each other using their air interfaces. However, for synchronisation through the air interface, each radio access unit must have a radio link connection to at least one other radio access unit. This solution suffers from the drawback that there are more radio access units required for covering the same geographical area compared to a wireless radio communication system of which the radio access units or base stations do not require a direct radio link connection.

In accordance with a further synchronisation technique, the radio access unit or radio base stations may be provided with separate or special synchronisation receivers..However, using such synchronisation receivers will significantly increase the costs of a radio access unit.

The most commonly used synchronisation technique is to connect the radio access units by a permanent or fixed data connection link, such as an ISDN (Integrated Service Digital Network) or an HDSL (High-bit-rate Digital Subscriber Line) transmission link. The transmission delay which a data packet encounters by transmission over a permanent data transmission link can be compensated for, such that the radio access units can be synchronised from a single synchronisation source or through permanent data transmission links connecting the radio access units, for example.

In practice, however, the radio access units, for communication purposes, connect to a radio exchange or mobile telephone switching office via a packet switched data network, such as an Ethernet packet switched data network, having data transfer devices such as bridges, routers, hubs and other network devices. However these devices may randomly delay the data by an undetermined amount of time which is unknown and even not constant, such that it is not possible to transmit timing synchronisation information to the radio access units via such a packet switched data network. This, because the delay which will be encountered by the synchronisation information data can not be compensated for.

Although in such a case synchronisation information can be transmitted using any of the above-mentioned techniques, i.e. via the air interfaces or separate transmission links having a predetermined and fixed delay, those skilled in the art will appreciate that the costs of the radio communication system as a whole will increase thereby.

### Summary of the Invention

It is an object of the present invention to present a packet switched data network for transmitting data packages not suffering from undetermined transfer time delays.

It is a further object of the present invention to present a cost effective radio communication network, comprising a plurality of radio access units which solely connect to such a packet switched data network, without requiring separate transmission links for synchronisation purposes.

According to the present invention, in a first aspect thereof, there is provided a packet switched data network having data transfer devices providing an undetermined delay in transferring data packets, which data network is characterized by comprising at least one data transfer bypass device, arranged for transferring data packets with a predetermined delay through said packet switched data network, wherein the or each data transfer bypass device being operatively connected for bypassing at least one data transfer device having an undetermined data packet transfer delay.

In the data network according to the present invention, data transfer devices such as bridges, routers, hubs and other devices providing an undetermined time delay in transferring data packets are bypassed in a manner such that it is possible to transfer a data packet with a predetermined and constant delay, which can be compensated for.

In accordance with a further embodiment of the packet switched data network according to the present invention, the data transfer bypass devices are arranged for selectively transferring data packets. With this embodiment, it is possible to transfer only those data packets via the data transfer bypass devices which may not be affected by an undetermined transfer delay, and such that all other data packets, the transfer of which is not prone to variable time delays, are transferred through the data network and the data transfer devices thereof having an undetermined data transfer delay.

The data transfer bypass devices according to the invention, in a still further embodiment thereof, comprise means for identifying data packets. Such identifying means can be arranged for detecting data packets which have to be transferred through a bypass device and/or for detecting data packets which must not be transferred through the data transfer bypass devices.

For identifying data packets, in a further embodiment of the data network according to the invention, the identifying means are arranged for identifying a data packet by an identifier comprising one of a group of: destination address, source address and type of data packet.

Those skilled in the art will appreciate that other identifiers which are already provided in a data packet, can be used for identifying purposes too.

In a still further embodiment of the data network according to the invention, the data transfer bypass devices may comprise means for providing a unique identifier to data packets to be transferred with a predetermined delay, and wherein the means for identifying the data packets are arranged for identifying this unique identifier. With this embodiment, for example, the content of a data packet nor the information contained therein has to be accessed for transferring the data packet through the bypass devices.

In a still further embodiment of the data network according to the invention, the means for providing the unique identifier are arranged for providing a unique synchronisation pattern.

In this embodiment of the invention, the synchronisation pattern is used for both identifying data packets which have to be transferred with a predetermined delay as well as providing a synchronisation function in accordance with the unique synchronisation pattern.

In order to provide an as flexible as possible data network configuration, in another embodiment of the invention, the data transfer bypass devices are arranged for operation in a master-slave configuration. That is, one of the bypass devices may operate as the master, whereas all the other bypass devices are slaved to the master. With this configuration, the data network can be extended in a very flexible manner, while providing a predetermined delay in transferring data packets through the bypass devices.

In a still further embodiment of the invention, a data transfer bypass device comprises means for measuring a time delay in transferring a data packet from one data transfer bypass device to another. Accordingly, a data transfer bypass devices, in this embodiment of the invention, can provide automatic compensation of the time delay which occurs in transferring a data packet between bypass devices.

In an embodiment of the invention, the means for measuring the time delay are arranged for sending and receiving an echo-message and for returning the time of receipt of the echo-message. From this information, the time delay can be easily calculated.

The invention further relates to a packet switched data network according to any of the previous claims, wherein one or more radio access units of a radio communications network connect to said packet switched data network, wherein said radio access units are arranged for providing service to a plurality of radio communication units, and wherein said packet switched data network is arranged for transferring synchronization data to said one or more radio access units using said data transfer bypass devices.

For the purpose of synchronisation, the packet switched data network, in a further embodiment thereof, comprises synchronisation generator means connected to a data transfer bypass device.

The radio communication network can be arranged for operating in accordance with any known Time Division Multiple Access (TDMA) radio communication standard, such as, but not limited to DECT (Digital Enhanced Cordless Telecommunications) and GSM (Global System for Mobile communications).

The invention further relates to a data transfer bypass device arranged for operating with a packet switched data network and/or a radio communication network as disclosed above, as well as a method of data transfer in a packet switched data network comprising data transfer devices having an undetermined delay in transferring data packets, which method is **characterised in that** the data transfer devices are bypassed using data transfer bypass devices for transferring data packets with a predetermined delay through said packet switched data network.

The above mentioned and other features and advantages of the invention are illustrated in the following description with reference to the enclosed drawings.

### Brief Description of the Drawings

Figure 1 shows, in a schematic and illustrative manner, a typical prior art packet switched data network.
Figure 2 shows, in a schematic and illustrative manner, a first embodiment of a packet switched data network having data transfer bypass devices in accordance with the present invention.
Figure 3 shows, in a schematic and illustrative manner, a second embodiment of a packet switched data network having a data transfer bypass device in accordance with the present invention.
Figure 4 shows, in a schematic and illustrative manner, a third embodiment of a packet switched data network having a data transfer bypass device in accordance with the present invention.
Figure 5 shows, in a schematic and illustrative manner, a first embodiment of a radio communication network in accordance with the present invention.
Figure 6 shows, in a schematic and illustrative manner, a second embodiment of a radio communication network in accordance with the present invention.
Figure 7 shows, in a schematic and illustrative manner, a third embodiment of a radio communication network in accordance with the present invention.
Figure 8 shows a block diagram of data transfer bypass device for use in a radio communication network as shown in figures 5 and 6, for example.
Figure 9 shows a block diagram of one of the multiple network interfaces of the data transfer bypass device shown in figures 5 and 6, for example.

### Detailed Description of the Embodiments

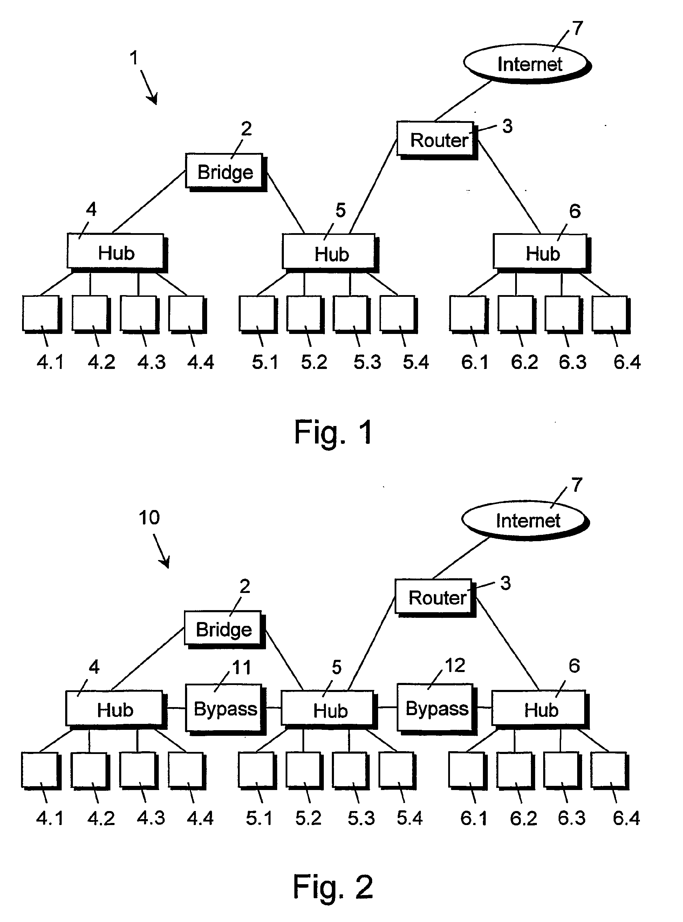

In figure 1, a typical packet switched data network is shown, such as an Ethernet data network, generally indicated by reference numeral 1. The Ethernet 1 comprises data transfer devices such as bridges 2, routers 3 and hubs 4, 5, 6. To each hub 4, 5, 6 a plurality of devices 4.1, 4.2, ..., 4.4, 5.1, 5.2, ..., 5.4 and 6.1, 6.2, ..., 6.4 connect. The devices 4.1-6.4 can be any apparatus or device such as a personal computer (PC) or, in a radio communication network, a radio access unit or radio base station, for example, using the data network 1 for data transfer purposes.

In figure 1, data between the hub 4 and the hub 5 are transferred via the bridge 2, whereas data between the hub 5 and the hub 6 are exchanged via the router 3, which connects to the Internet 7, for example.

Those skilled in the art will appreciate that, dependent on the size of the network, several bridges 2 and routers 3 and more or less hubs 4, 5, 6 may form part of the network 1.

In figure 1, data transfer via the bridge 2 and the router 3 will cause an undetermined delay in the transfer of data packets, which delay is neither constant. Each hub 4, 5, 6 also causes a time delay in transferring a data packet, however the delays in a hub can be measured and are constant.

As disclosed in the opening part of the present description, in practice, there is a need for transferring data packets with a predetermined and constant delay, such as, but not limited to, data packets used for synchronisation purposes.

Figure 2 shows a first embodiment of a packet switched data network 10 according to the present invention, comprising data transfer bypass devices 11, 12. Data transfer bypass device 11 connects between hub 4 and hub 5, whereas data transfer bypass device 12 connects between hub 5 and hub 6. That is, data transfer bypass device 11 is connected to bypass the bridge 2, whereas the data transfer bypass device 12 is connected to bypass the router 3.

In the data network 10, data packets between hub 4 and hub 5, instead of being transferred via the bridge 2, can be transferred via the data transfer bypass device 11, providing a predetermined and fixed transfer delay. Likewise, data packets between the hub 5 and the hub 6 can be transferred via the data transfer bypass 12 having a predetermined and fixed packet transfer delay.

Once the data packet transfer delay in a hub 4, 5 and 6 is known as well as the data packet transfer delay by each data transfer bypass device 11 and 12 and the data packet transfer time delay over a transmission link connecting the devices 4.1-6.4, any delay of a packet transferred from any of the devices 4.1-6.4 via the data transfer bypass devices 11, 12 can be compensated for.

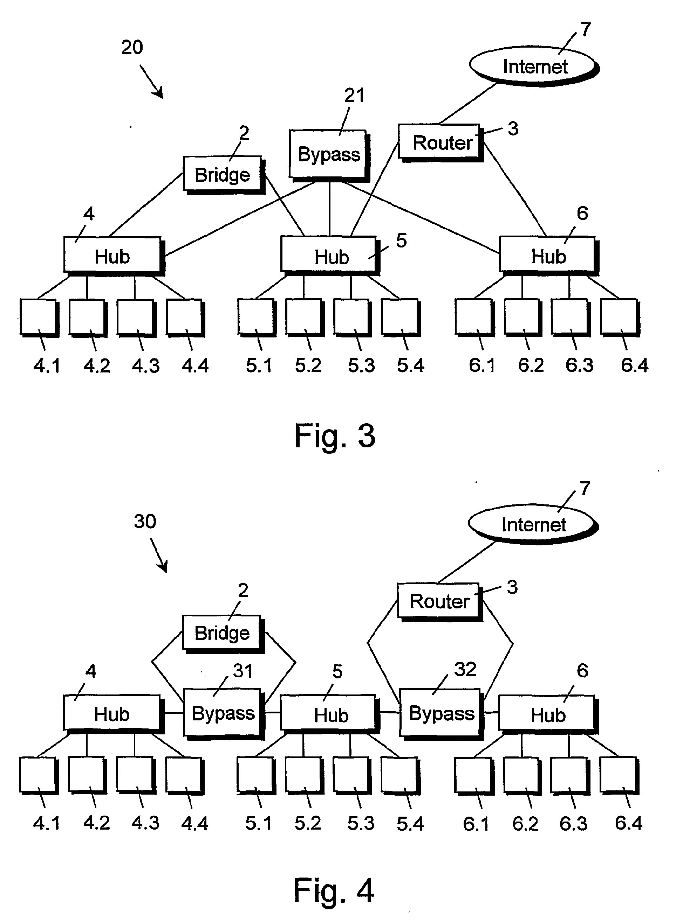

Figure 3 shows a second embodiment of a packet switched data network 20 in accordance with the present invention, wherein a single data transfer bypass device 21 connects to each of the hubs 4, 5 and 6.

Data packets transferred between any of the devices 4.1-6.4 using the data transfer bypass device 21 will encounter a fixed transmission time delay, which can be compensated for once the transmission time delays in the hubs 4, 5, 6, the data transfer bypass device 21 and the applicable connection links are known.

Figure 4 shows a third embodiment of a packet switched data network 30 in accordance with the present invention wherein, different from the packet switched data network 10 shown in figure 2, the bridge 2 directly connects to the data transfer bypass device 31, and wherein the router 3 directly connects to the data transfer bypass device 32. Data transfer bypass device 31 connects to the hubs 4 and 5, whereas data transfer device 32 connects to the hubs 5 and 6. The data transfer bypass devices 31, 32 have a simple hub on each input and output thereof, for connecting the hubs 4, 5 and 6 and the bridge 2 and router 3.

It will be appreciated that, dependent on the physical location of the devices 2, 3, 4, 5, 6, 31 and 32, the network configuration as shown in figure 4 can save transmission links or cables compared to the first embodiment of the packet switched data network according to the invention as shown in figure 2. In the data network 30, data packets transferred via the data transfer bypass devices 31 and 32 will have a predetermined and fixed delay, which can be compensated for.

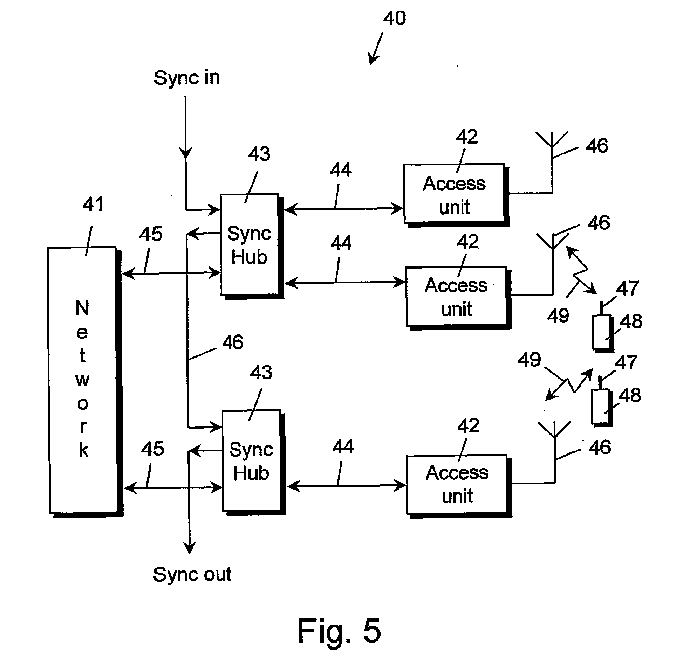

Figure 5 shows a first embodiment of a radio communication network 40, such as but not limited to a radio communication network operating under the Digital Enhanced Cordless Telecommunications (DECT) or the Global System for Mobile communications (GSM) standard, for example.

In the embodiment shown, the radio communication network 40 comprises a plurality of radio access units or radio base stations 42 arranged for exchanging data packets via an air interface 49 with a plurality of radio communication units 48, such as radio telephones or the like. Both, the radio access units 42 and the radio communication units 48 comprise receivers/transmitters and control means for exchanging data packets. For convenience sake, these means are illustrated by antennas 46 and 47 for the radio access units 42 and the radio communication units 48, respectively. Radio access units and radio communication units of this type are generally known and commercially available and need not be further elucidated for the persons skilled in the art.

For timing and synchronisation purposes, the radio access units 42 connect to a so-called synchronisation or sync hub 43. The sync hubs 43 connect to the data network 41 for transferring data packets to the radio access units 42, such as information data packets for the radio communication units 48.

In accordance with the present invention, synchronisation information for the radio access units is transmitted to the sync hubs 43 via a separate data link 46, the input Sync in and the output Sync out of which connect to a data transfer bypass device such as a data transfer bypass device 11, 12, 21, 31, 32 shown in figures 2, 3, 4.

The radio access units 42 may connect to the sync hub 43 by a normal Ethernet (twisted pair) connection 44, for example. Likewise the sync hubs 43 may connect to the network 41 by a normal Ethernet (twisted pair) data link 45.

The synchronisation information can be sent to the radio access units 42 by either:
- a normal Ethernet packet, wherein the destination/source or message type is used to identify this packet;
- a special Ethernet packet, containing a unique synchronisation pattern, not recognisable by other Ethernet devices;
- link pulses, which are normally used to keep a link active;
- a common mode signal between two Ethernet twisted pairs; and
- if available, use of an extra twisted pair in the network cable connection.

During transmission of synchronisation information to the radio access unit, the network site is blocked by sending a jam signal to avoid network data packet collisions.

Instead of the embodiment shown in figure 5, wherein the synchronisation information is transmitted from one sync hub 43 to another, separate sync sources may be used, such as shown in a second embodiment of a radio communication network 50 in accordance with the present invention.

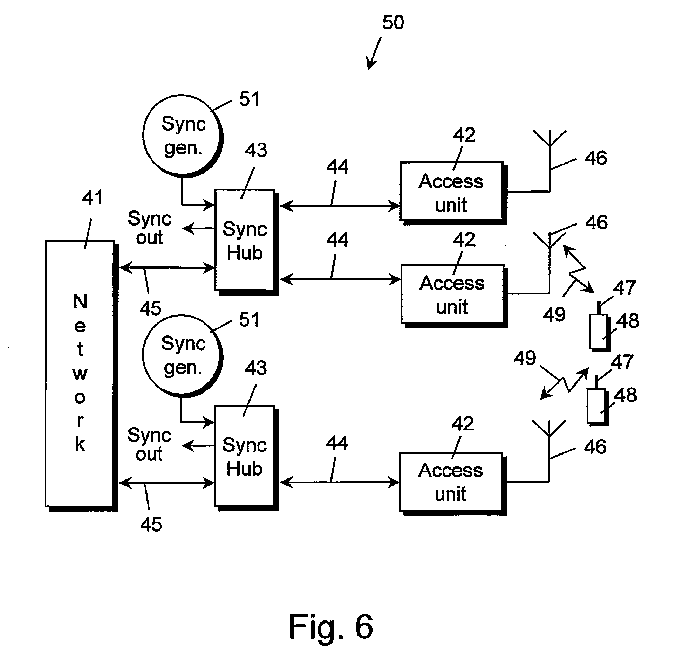

In the embodiment of the radio communication network 50 shown in figure 6, separate sync generators 51 connect to a sync hub 43, which sync generators 51 can be associated with GSM, GPS, DAB or TV receivers, for example.

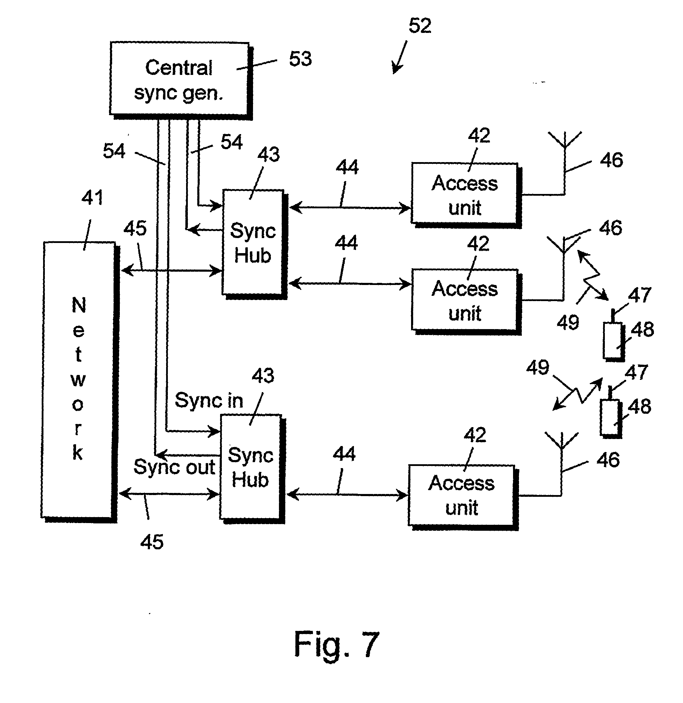

Figure 7 shows a third embodiment of a radio network 52 in accordance with the present invention, in which synchronisation information is transmitted to the sync hubs 43 from a central synchronisation generator 53. The sync generator 53 may connect to each of the synchronisation hubs 43 separately by normal Ethernet (twisted pair) connections 54, for each Sync in and Sync out connection.

In the case of DECT, for example, if the connection links 44 between the radio access units 42 and the sync hubs 43 do not exceed 100 m no cable delay compensation is required for an Ethernet connection.

In the embodiment of figure 7, for example, the central synchronisation generator 53 can be arranged for compensating link delays over the connection links 54, such that these links can be 1000 m or even more for an Ethernet connection.

For connecting the sync hubs 43 in the radio communication networks 40 and 50 shown in figures 5 and 6, for example, in order to transmit synchronisation information over longer distances, data transfer bypass devices 11, 12, 21, 31, 32 can be used, as shown in figures 2, 3, 4.

The data transfer bypass devices, in such an embodiment of a radio communication network according to the invention, operate as synchronisation data transfer bypass devices, in a master-slave type setting, for example, wherein one of the synchronisation data bypass devices operates as the master and all the other bypass devices are slaved to this master. Optionally, the master can be synchronised by an externally applied synchronisation signal.

If multiple data synchronisation transfer bypass devices are series connected, the synchronisation data will be passed from the master to the most upstream slave and then further down the series connection. In the case of ring connections, synchronisation data is obtained from a source which is the lowest number of hubs away from the master device or, alternatively experiences the lowest network delay time.

All synchronisation data transfer bypass devices, except the master, have to measure the network delay from the source of which the synchronisation data is obtained and including link delay and hub delay. The measured network delay is used to adjust the sync hubs 43 in order to establish that the synchronisation data are received by the radio access units 42 within the time limits available for ensuring synchronous operation of the radio access units 42.

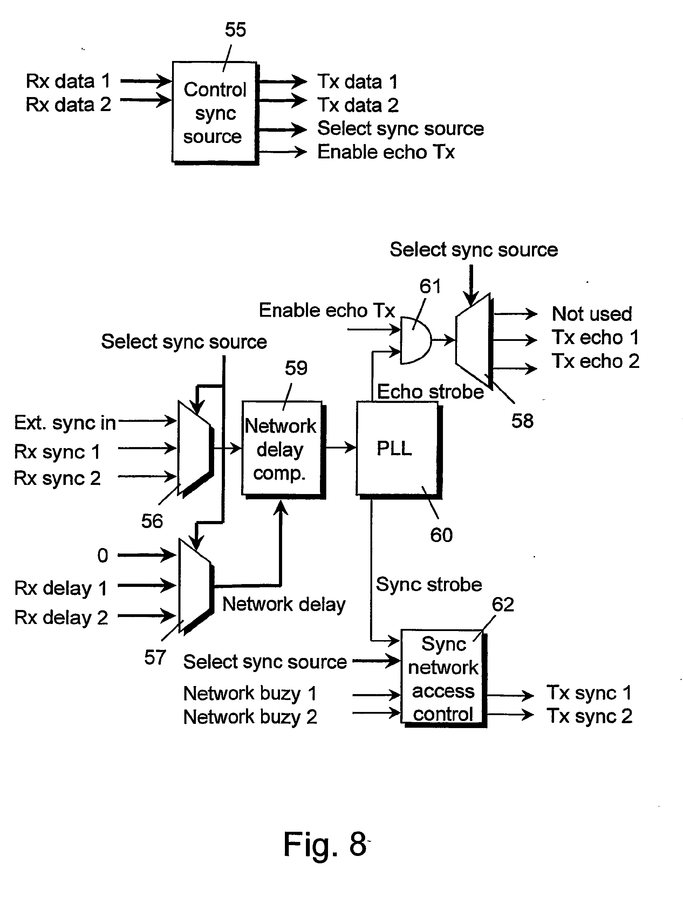

Figure 8 shows, in more detail, a block diagram of a synchronisation data transfer bypass device in accordance with the present invention.

For clarity sake, only two network connections are shown, respectively indicated by Rx1/Tx1 and Rx1/Tx2.

The synchronisation data transfer bypass device in accordance with the present invention comprises a control sync source circuit 55 having receive data input Rx data 1, Rx data 2, ... and transmit data output Tx data 1, Tx data 2, ... terminals, for receiving and transmitting data to the radio access units of a radio communication system.

The control sync source circuit 55 is operatively arranged for identifying data packets, such as synchronisation data packets. Such data packets may be identified, among others, using an identifier such as a destination address, a source address and/or the type of data packet.

Identification of a data packet or data packets which have to be transferred with a predetermined transfer delay is signalised by a Select sync source output of the control sync source circuit 55. Through the select sync source output multiplexers 56, 57 are controlled for bypassing the respective data packets received at one of the inputs Rx sync 1, Rx sync 2, ....

The network delay which data packets transferred via the data transfer bypass device will experience, is measured by sending an echo-message to the source from which the synchronisation data are obtained. This source then returns in the next synchronisation message the time at which the echo-message has been received, from which information the delay can be measured, for example.

In the embodiment shown in figure 8, the echo-messages are transmitted via multiplexer 58, output Tx echo 1, Tx echo 2, ... The multiplexer 58 is enabled by the select sync source output of the control sync source circuit 55.

The control sync source circuit 55 comprises an Enable echo Tx output, for enabling the transmission of an echo-message, which Enable echo TX output connects to the input of a logic AND port 61, another input of which connects to an Echo strobe output of a PLL circuit 60. The output of the AND port 61 connects to the multiplexer 58.

The PLL circuit 60 provides timing for transmitting the echo-message, which PLL is controlled by a network delay compensation circuit 59.

The measured delay of a particular network connection is transferred to the network delay compensation circuit 59 via a multiplexer 57, at the inputs of which the particular transmission delays Rx delay 1, Rx delay 2, ... of the several network connections are available. The multiplexer 57 is enabled by the Select sync source output of the control sync source circuit 55.

The actual data synchronisation transfer is provided by a sync network access control circuit 62. The sync network access control circuit 62 is controlled by a Sync strobe output of the PLL circuit 60, the Select sync source output of the control sync source circuit 55 and a Network busy signal of the particular network connection, i.e. Network busy 1, Network busy 2, ..., in order to avoid collision with data packets transmitted to a radio access unit.

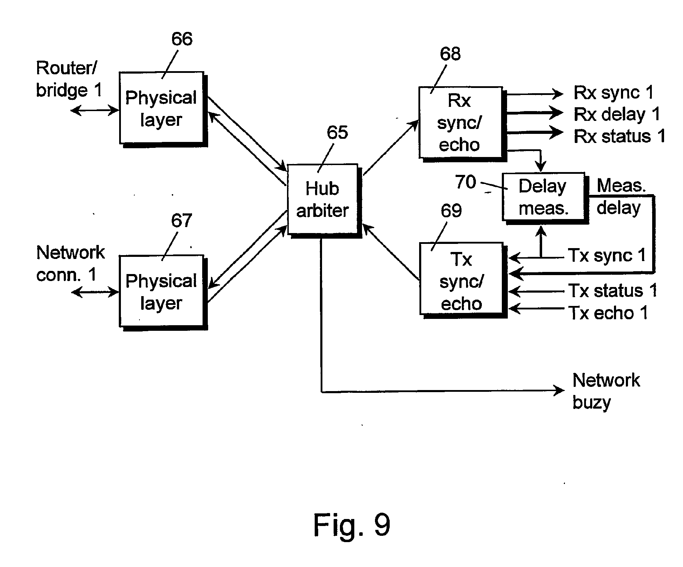

Figure 9 shows a block diagram of one of the multiple network interfaces of a data synchronisation bypass device according to the present invention.

A so-called hub arbiter circuit 65 receives and transmits data to the physical layer 66 of a router or bridge 1, the index 1 relates to network connection 1. The hub arbiter circuit 65 likewise receives and transmits data to the physical layer 67 of the network connection 1.

Reference numeral 70 refers to a network delay measurement circuit comprising input from an Rx sync/echo circuit 68 and a Tx sync/echo circuit 69. The delay measurement circuit 70 is arranged for measuring the delay of the network connection 1 by comparing the transmit and receive times of a particular echo-message, i.e. Tx echo 1.

The Rx sync/echo circuit 68 and the Rx sync/echo circuit 69 connect to the hub arbiter 65 for the transmission and receipt of the synchronisation data and provides a network busy signal, in order to avoid data collision.

Although the invention has been more specifically disclosed in connection with a radio communication network, those skilled in the are will appreciate that the novel and inventive concept of the present invention is not limited to radio communication data networks, but can be applied in a general sense for each data network wherein data packets have to be transferred with a predetermined delay.

## Claims

1. A packet switched data network (10, 20, 30) having data transfer devices (2, 3) providing an undetermined delay in transferring data packets, **characterized in that** said data network comprises at least one data transfer bypass device (11, 12, 21, 31, 32), arranged for transferring data packets with a predetermined delay through said packet switched data network (10, 20, 30), the or each data transfer bypass device (11, 12, 31, 32) being operatively connected for bypassing at least one data transfer device (2, 3) having an undetermined data packet transfer delay.

2. A packet switched data network (10, 20, 30) according to claim 1, wherein a data transfer bypass device (11, 12, 21, 31, 32) connects to at least one data transfer device (4, 5, 6) of said network (10, 20, 30) having a predetermined data transfer delay.

3. A packet switched data network (10, 20, 30) according to any of the previous claims, wherein a data transfer bypass device (11, 12, 21, 31, 32) is arranged for selectively transferring data packets.

4. A packet switched data network (10, 20, 30) according to any of the previous claims, wherein a data transfer bypass device (11, 12, 21, 31, 32) comprises means for identifying data packets (55).

5. A packet switched data network (10, 20, 30) according to claim 4, wherein said means for identifying data packets (55) are arranged for identifying a data packet by an identifier comprising one of a group of: destination address, source address and type of data packet.

6. A packet switched data network (10, 20, 30) according to claim 4, wherein a data transfer bypass device (11, 12, 21, 31, 32) comprises means for providing a unique identifier to data packets to be transferred with a predetermined delay, and wherein said means for identifying said data packets (55) are arranged for identifying said unique identifier.

7. A packet switched data network (10, 20, 30) according to claim 6, wherein said means for providing said unique identifier are arranged for providing a unique synchronization pattern.

8. A packet switched data network (10, 20, 30) according to any of the previous claims, comprising a plurality of data transfer bypass devices (11, 12, 21, 31, 32) arranged in a master-slave configuration.

9. A packet switched data network (10, 20, 30) according to any of the previous claims, wherein a data transfer bypass device (11, 12, 21, 31, 32) comprises means for measuring a time delay (70) in transferring a data packet from one data transfer bypass device to another.

10. A packet switched data network (10, 20, 30) according to claim 9, wherein said means for measuring said time delay (70) are arranged for sending and receiving an echo-message and for returning the time of receipt of said echo-message.

11. A packet switched data network (10, 20, 30) according to any of the previous claims, wherein one or more radio access units (42) of a radio communications network (40, 50, 52) connect to said packet switched data network (10, 20, 30), wherein said radio access units (42) are arranged for providing service to a plurality of radio communication units (48), and wherein said packet switched data network (10, 20, 30) is arranged for transferring synchronization data to said one or more radio access units (42) using said data transfer bypass devices (11, 12, 21, 31, 32).

12. A packet switched data network (10, 20, 30) according to claim 11, wherein said packet switched data network (10, 20, 30) comprises synchronization generator means (51, 53) connected to a data transfer bypass device (11, 12, 21, 31, 32).

13. A packet switched data network (10, 20, 30) according to claim 11 or 12, wherein said radio access units (42) are connected by a synchronisation hub (43) to said packet switched data network (10, 20, 30).

14. A data transfer bypass device arranged for operating with a packet switched data network (10, 20, 30) in accordance with any of the claims 1-13, said data transfer bypass device being arranged for transferring data packets with a predetermined delay through said packet switched data network (10, 20, 30), comprising means for operatively connecting said data transfer bypass device (11, 12, 31, 32) to said data network for bypassing at least one data transfer device (2, 3) having an undetermined data packet transfer delay.

15. A method of data transfer in a packet switched data network (10, 20, 30) comprising data transfer devices (2, 3) having an undetermined delay in transferring data packets, **characterized by** bypassing said data transfer devices (2, 3) using data transfer bypass devices (11, 12, 21, 31, 32) for transferring data packets with a predetermined delay through said packet switched data network (10, 20, 30).

## Patentansprüche

1. Paketvermitteltes Datennetz (10, 20, 30) mit Datenübertragungsgeräten (2, 3), die eine unbestimmte Verzögerung in Übertragung von Datenpaketen bereitstellen, **dadurch gekennzeichnet, dass** das Datennetzwerk mindestens ein Datenübertragungs-Bypass-Gerät (11, 12, 21, 31, 32) umfasst, das eingerichtet ist zum Übertragen von Datenpaketen mit einer vorbestimmten Verzögerung durch das paketvermittelte Datennetz (10, 20, 30), wobei das oder jedes Datenübertragungs-Bypass-Gerät (11, 12, 31, 32) operativ verbunden ist zum Umgehen mindestens eines Datenübertragungsgeräts (2, 3), das eine unbestimmte Datenpaketübertragungsverzögerung aufweist.

2. Paketvermitteltes Datennetz (10, 20, 30) nach Anspruch 1, wobei ein Datenübertragungs-Bypass-Gerät (11, 12, 21, 31, 32) sich mit mindestens einem Datenübertragungsgerät (4, 5, 6) des Netzes (10, 20, 30) verbindet, eine vorbestimmte Datenübertragungsverzögerung aufweisend.

3. Paketvermitteltes Datennetz (10, 20, 30) nach einem der vorangegangenen Ansprüche, wobei ein Datenübertragungs-Bypass-Gerät (11, 12, 21, 31, 32) eingerichtet ist zum selektiven Übertragen von Datenpaketen.

4. Paketvermitteltes Datennetz (10, 20, 30) nach einem der vorangegangenen Ansprüche, wobei ein Datenübertragungs-Bypass-Gerät (11, 12, 21, 31, 32) Mittel zum Identifizieren von Datenpaketen (55) umfasst.

5. Paketvermitteltes Datennetz (10, 20, 30) nach Anspruch 4, wobei die Mittel zum Identifizieren von Datenpaketen (55) eingerichtet sind zum Identifizieren eines Datenpakets durch einen Identifizierer, der einen von einer Gruppe umfasst von: Zieladresse, Quelladresse und Typ von Datenpaket.

6. Paketvermitteltes Datennetz (10, 20, 30) nach Anspruch 4, wobei ein Datenübertragungs-Bypass-Gerät (11, 12, 21, 31, 32) Mittel zum Bereitstellen eines eindeutigen Identifizierers zu Datenpaketen, welche mit einer vorbestimmten Verzögerung übertragen werden sollen, umfasst, und wobei die Mittel zum Identifizieren der Datenpakete (55) eingerichtet sind zum Identifizieren des eindeutigen Identifizierers.

7. Paketvermitteltes Datennetz (10, 20, 30) nach Anspruch 6, wobei die Mittel zum Bereitstellen des eindeutigen Identifizierers eingerichtet sind zum Bereitstellen eines eindeutigen Synchronisationsmusters.

8. Paketvermitteltes Datennetz (10, 20, 30) nach einem der vorangegangenen Ansprüche, das eine Vielzahl von Datenübertragungs-Bypass-Geräten (11, 12, 21, 31, 32) umfasst, die in einer Master-Slave-Konfiguration eingerichtet sind.

9. Paketvermitteltes Datennetz (10, 20, 30) nach einem der vorangegangenen Ansprüche, wobei ein Datenübertragungs-Bypass-Gerät (11, 12, 21, 31, 32) Mittel zum Messen einer Zeitverzögerung (70) im Übertragen eines Datenpakets von einem Datenübertragungs-Bypass-Gerät zu einem anderen umfasst.

10. Paketvermitteltes Datennetz (10, 20, 30) nach Anspruch 9, wobei die Mittel zum Messen der Zeitverzögerung (70) eingerichtet sind zum Senden und Empfangen einer Echo-Nachricht und zum Zurückgeben der Zeit des Empfangens der Echo-Nachricht.

11. Paketvermitteltes Datennetz (10, 20, 30) nach einem der vorangegangenen Ansprüche, wobei eine oder mehrere Funkzugangseinheiten (42) eines Funkkommunikationsnetzes (40, 50, 52) sich zu dem paketvermittelten Datennetz (10, 20, 30) verbinden, wobei die Funkzugangseinheiten (42) eingerichtet sind zum Bereitstellen von Service zu einer Vielzahl von Funkkommunikationseinheiten (48), und wobei das paketvermittelte Datennetz (10, 20, 30) eingerichtet ist zum Übertragen von Synchronisationsdaten zu der einen oder den mehreren Funkzugangseinheiten (42) unter Verwendung der Datenübertragungs-Bypass-Geräte (11, 12, 21, 31, 32).

12. Paketvermitteltes Datennetz (10, 20, 30) nach Anspruch 11, wobei das paketvermittelte Datennetz (10, 20, 30) Synchronisationserzeugungsmittel (51, 53) umfasst, die zu einem Datenübertragungs-Bypass-Gerät (11, 12, 21, 31, 32) verbunden sind.

13. Paketvermitteltes Datennetz (10, 20, 30) nach Anspruch 11 oder 12, wobei die Funkzugangseinheiten (42) durch einen Synchronisationshub (43) zu dem paketvermittelten Datennetz (10, 20, 30) verbunden sind.

14. Datentransfer-Bypassgerät, das eingerichtet ist zum Operieren mit einem paketvermittelten Datennetz (10, 20, 30) in Übereinstimmung mit einem der Ansprüche 1 bis 13, wobei das Datenübertragungs-Bypass-Gerät eingerichtet ist zum Übertragen von Datenpaketen mit einer vorbestimmten Verzögerung durch das paketvermittelte Datennetz (10, 20, 30), umfassend Mittel zum operativ Verbinden des Datenübertragungs-Bypass-Geräts (11, 12, 31, 32) zu dem Datennetz zum Umgehen von mindestens einem Datenübertragungsgerät (2, 3), das eine unbestimmte Datenpaket-Übertragungsverzögerung aufweist.

15. Verfahren des Datentransfers in einem paketvermittelten Datennetz (10, 20, 30), das Datenübertragungsgeräte (2, 3) umfasst, die eine unbestimmte Verzögerung im Übertragen von Datenpaketen aufweisen, **gekennzeichnet durch** Umgehen des Datenübertragungsgeräts (2, 3) unter Verwendung von Datenübertragungs-Bypass-Geräten (11, 12, 21, 31, 32) zum Übertragen von Datenpaketen mit einer vorbestimmten Verzögerung **durch** das paketvermittelte Datennetz (10, 20, 30).

## Revendications

1. Réseau de données à commutation de paquets (10, 20, 30) possédant des dispositifs de transfert de données (2, 3) produisant un retard indéterminé dans le transfert des paquets de données, **caractérisé en ce que** ledit réseau de données comprend au moins un dispositif de transfert de données en dérivation (11, 12, 21, 31, 32), conçu pour transférer des paquets de données avec un retard prédéterminé sur ledit réseau de données à commutation de paquets (10, 20, 30), le ou les dispositifs de transfert de données en dérivation (11, 12, 31, 32) étant connectés en service afin d'éviter au moins un dispositif de transfert de données (2, 3) possédant un retard indéterminé de transfert des paquets de données.

2. Réseau de données à commutation de paquets (10, 20, 30) selon la revendication 1, dans lequel un dispositif de transfert de données en dérivation (11, 12, 21, 31, 32) se connecte à au moins un dispositif de transfert de données (4, 5, 6) dudit réseau (10, 20, 30) possédant un retard prédéterminé de transfert des données.

3. Réseau de données à commutation de paquets (10, 20, 30) selon l'une quelconque des revendications précédentes, dans lequel un dispositif de transfert de données en dérivation (11, 12, 21, 31, 32) est conçu pour transférer sélectivement des paquets de données.

4. Réseau de données à commutation de paquets (10, 20, 30) selon l'une quelconque des revendications précédentes, dans lequel un dispositif de transfert de données en dérivation (11, 12, 21, 31, 32) comprend un moyen destiné à identifier des paquets de données (55).

5. Réseau de données à commutation de paquets (10, 20, 30) selon la revendication 4, dans lequel ledit moyen destiné à identifier des paquets de données (55) est conçu pour identifier un paquet de données par un identificateur comprenant un des éléments du groupe suivant : adresse de destination, adresse d'origine et type de paquet de données.

6. Réseau de données à commutation de paquets (10, 20, 30) selon la revendication 4, dans lequel un dispositif de transfert de données en dérivation (11, 12, 21, 31, 32) comprend un moyen destiné à foumir un identificateur unique à des paquets de données à transférer avec un retard prédéterminé et dans lequel ledit moyen destiné à identifier lesdits paquets de données (55) est conçu pour identifier ledit identificateur unique.

7. Réseau de données à commutation de paquets (10, 20, 30) selon la revendication 6, dans lequel ledit moyen destiné à foumir ledit identificateur unique est conçu pour foumir un motif de synchronisation unique.

8. Réseau de données à commutation de paquets (10, 20, 30) selon l'une quelconque des revendications précédentes, comprenant une pluralité de dispositifs de transfert de données en dérivation (11, 12, 21, 31, 32) disposés dans une configuration maître-esclave.

9. Réseau de données à commutation de paquets (10, 20, 30) selon l'une quelconque des revendications précédentes, dans lequel un dispositif de transfert de données en dérivation (11, 12, 21, 31, 32) comprend un moyen destiné à mesurer un retard de temps (70) dans le transfert d'un paquet de données entre un dispositif de transfert de données en dérivation et un autre.

10. Réseau de données à commutation de paquets (10, 20, 30) selon la revendication 9, dans lequel ledit moyen destiné à mesurer ledit retard de temps (70) est conçu pour émettre et recevoir un message d'écho et pour renvoyer l'heure de réception dudit message d'écho.

11. Réseau de données à commutation de paquets (10, 20, 30) selon l'une quelconque des revendications précédentes, dans lequel une ou plusieurs unités d'accès par radio (42) d'un réseau de communication par radio (40, 50, 52) se connectent audit réseau de données à commutation de paquets (10, 20, 30), dans lequel lesdites unités d'accès par radio (42) sont conçues pour foumir un service à une pluralité d'unités de communication par radio (48) et dans lequel ledit réseau de données à commutation de paquets (10, 20, 30) est conçu pour transférer des données de synchronisation auxdites une ou plusieurs unités d'accès par radio (42), en utilisant lesdits dispositifs de transfert de données en dérivation (11, 12, 21, 31, 32).

12. Réseau de données à commutation de paquets (10, 20, 30) selon la revendication 11, dans lequel ledit réseau de données à commutation de paquets (10, 20, 30) comprend un moyen générateur de synchronisation (51, 53) connecté à un dispositif de transfert de données en dérivation (11, 12, 21, 31, 32).

13. Réseau de données à commutation de paquets (10, 20, 30) selon la revendication 11 ou 12, dans lequel lesdites unités d'accès par radio (42) sont connectées par un concentrateur de synchronisation (43) audit réseau de données à commutation de paquets (10, 20, 30).

14. Dispositif de transfert de données en dérivation conçu pour fonctionner avec un réseau de données à commutation de paquets (10, 20, 30) selon l'une quelconque des revendications 1 à 13, ledit dispositif de transfert de données en dérivation étant conçu pour transférer des paquets de données avec un retard prédéterminé sur ledit réseau de données à commutation de paquets (10, 20, 30) et comprenant un moyen destiné à connecter en service ledit dispositif de transfert de données en dérivation (11, 12, 31, 32) audit réseau de données afin d'éviter au moins un dispositif de transfert de données (2, 3) possédant un retard indéterminé de transfert de paquets de données.

15. Procédé de transfert de données sur un réseau de données à commutation de paquets (10, 20, 30) comprenant des dispositifs de transfert de données (2, 3) possédant un retard indéterminé dans le transfert de paquets de données, **caractérisé par** le fait d'éviter lesdits dispositifs de transfert de données (2, 3) en utilisant des dispositifs de transfert de données en dérivation (11, 12, 21, 31, 32) afin de transférer des paquets de données avec un retard prédéterminé sur ledit réseau de données à commutation de paquets (10, 20, 30).
